# EUROPEAN PATENT APPLICATION

(11) **EP 4 095 993 A1**
(43) Date of publication of application: **30.11.2022**
(21) Application number: 21870551.5
(22) Date of filing: 31.03.2021
(51) Int. Cl.: H01M 50/183, H01M 50/184, H01M 50/188

(54) **BATTERY**

(71) Applicant: Ningde Amperex Technology Ltd., Ningde, Fujian 352106 (CN)
(72) Inventor: DONG, Yuyang, Ningde, Fujian 352106 (CN); YAN, Dongyang, Ningde, Fujian 352106 (CN); ZENG, Qiao, Ningde, Fujian 352106 (CN)
(74) Representative: Klunker IP Patentanwälte PartG mbB
(86) International application number: PCT/CN2021/084702
(87) International publication number: WO 2022/205193

(57) **Abstract**

This application discloses a battery, including a first electrode, a second electrode, a first layer, and a housing. The first electrode includes: a first conductor having a first face and a second face, and a first metal plate connected to the first face of the first conductor. The second electrode includes: a second conductor having a third face and a fourth face, and a second metal plate connected to the third face of the second conductor. The first layer includes an insulating material and is connected to a first surface of the first metal plate and a third surface of the second metal plate. The housing includes a first part and a second part, and covers the first electrode, the second electrode, and at least part of the first layer through the first part and the second part, where at least part of the first part is connected to the first layer.

## Description

### TECHNICAL FIELD

This application relates to the field of energy storage apparatuses, and in particular, to a battery.

### BACKGROUND

At present, there are three main energy storage means: electrochemical energy storage, mechanical energy storage, and electromagnetic energy storage. Electrochemical energy storage accounts for an increasing proportion in the future energy storage field due to its high energy density, long life, fast response, and other characteristics. In a soft package battery, a tab protruding from a head of a battery cell protrudes out of a packaging bag. This structure reduces airtightness of the packaging bag.

### SUMMARY

An objective of this application is to provide a battery to restrain a decrease of airtightness in a housing due to provision of a first metal plate and a second metal plate.

Some embodiments of this application provide a battery. The battery includes a first electrode, a second electrode, a first layer, and a housing. The first electrode includes: a first conductor having a first face and a second face, and a first metal plate connected to the first face of the first conductor. The second electrode includes: a second conductor having a third face and a fourth face, and a second metal plate connected to the third face of the second conductor. The first layer includes an insulating material and is connected to a first surface of the first metal plate and a third surface of the second metal plate. The housing includes a first part and a second part, and covers the first electrode, the second electrode, and at least part of the first layer through the first part and the second part, where at least part of the first part is connected to the first layer.

In this application, the first layer is provided between the first metal plate and the housing or between the second metal plate and the housing, to implement sealing of the first electrode and the second electrode in the housing, and restrain a decrease of airtightness in the housing due to provision of the first metal plate and the second metal plate can be restrained. In addition, the first layer covering the first metal plate and the second metal plate is provided, so that relative positions of the first metal plate and the second metal plate are fixed. In this way, the first metal plate and the second metal plate are not easy to tilt when subject to external force, avoiding that sealing performance is affected by the tilt. In addition, the first layer with a one-piece form prevents the first part and the second part of the housing located between the first metal plate and the second metal plate from coming into direct contact, so that a height difference in a sealing zone is small, further improving the sealing performance.

According to some embodiments of this application, the first layer includes a first zone connected to the first part and a second zone connected to the second zone and away from the housing. The second zone away from the housing is provided, so that the first layer is partially exposed outside the housing, which can avoid that an edge of the housing is not sealed during packaging.

According to some embodiments of this application, the first layer further includes a third zone connected to the second zone and covered by the housing. The third zone is provided, so that the first layer extends inward from the sealing zone, which can avoid that an effective sealing width becomes smaller due to the first layer not extending from the sealing zone to the inside of the housing.

According to some embodiments of this application, in the first layer, the first zone is shorter than the second zone in a first direction extending from the first zone to the second zone.

According to some embodiments of this application, in the first layer, the first zone is longer than the second zone in a first direction extending from the first zone to the second zone. A shorter length of the second zone has smaller impact on subsequent packaging.

According to some embodiments of this application, in the first layer, the third zone is shorter than the second zone in a first direction extending from the first zone to the second zone. A shorter length of the third zone allows an electrode assembly to occupy less internal space of the housing, thereby increasing energy density.

According to some embodiments of this application, in the first layer, the third zone is longer than the second zone in a first direction extending from the first zone to the second zone.

According to some embodiments of this application, the first layer includes a first zone connected to the first part and a third zone connected to the first zone and covered by the housing.

According to some embodiments of this application, the first layer is shorter than the housing in a second direction extending from the first metal plate to the second metal plate.

According to some embodiments of this application, the first layer is formed by stacking one or more layers of materials in a third direction perpendicular to the first surface of the first metal plate.

According to some embodiments of this application, the first layer is provided away from the first conductor.

According to some embodiments of this application, the battery further includes a second layer containing an insulating material, where the second layer is connected to both a second surface of the first metal plate and a fourth surface of the second metal plate.

According to some embodiments of this application, the first layer is connected to the second layer.

According to some embodiments of this application, the first layer includes a fourth zone located between the first metal plate and the second metal plate, where when viewed from a third direction perpendicular to the first surface of the first metal plate, the fourth zone is connected to the second layer.

According to some embodiments of this application, the first layer further includes a fifth zone located on a side of the first metal plate away from the fourth zone and a sixth zone located on a side of the second metal plate away from the fourth zone, where when viewed from the third direction perpendicular to the first surface of the first metal plate, at least one of the fifth zone or the sixth zone is connected to the second layer.

According to some embodiments of this application, when viewed from a third direction perpendicular to the first surface of the first metal plate, the first layer is connected to the second layer at least in the first zone.

According to some embodiments of this application, when viewed from a third direction perpendicular to the first surface of the first metal plate, the first layer is connected to the second layer at least in the second zone.

According to some embodiments of this application, the first layer includes a first zone connected to the first part and a third zone covered by the housing and away from the first zone.

According to some embodiments of this application, when viewed from a third direction perpendicular to the first surface of the first metal plate, the first layer is connected to the second layer at least in the third zone.

According to some embodiments of this application, the first layer includes at least one of polyethylene, polypropylene, phenolic resin, melamine resin, unsaturated polyester resin, epoxy resin, silicone resin, or polyurethane.

According to some embodiments of this application, the second layer includes at least one of polyethylene, polypropylene, phenolic resin, melamine resin, unsaturated polyester resin, epoxy resin, silicone resin, or polyurethane.

According to some embodiments of this application, the first layer allows visible light to pass through.

According to some embodiments of this application, the second layer allows visible light to pass through.

### BRIEF DESCRIPTION OF DRAWINGS

The above and/or additional aspects and advantages of this application will become obviously easy to understand from the description of the embodiments with reference to the following drawings.
FIG. 1 is a side view of a battery according to an embodiment of this application;
FIG. 2 is a front view of the battery shown in FIG. 1;
FIG. 3 is a rear view of the battery shown in FIG. 1;
FIG. 4 is a schematic diagram of a partial structure of the battery shown in FIG. 1;
FIG. 5 is a cross-sectional view of the battery shown in FIG. 4 in a direction V-V;
FIG. 6 is a cross-sectional view of a battery according to another embodiment of this application;
FIG. 7 is a cross-sectional view of the battery shown in FIG. 4 in a direction VII-VII;
FIG. 8 is a cross-sectional view of the battery shown in FIG. 4 in a direction VIII-VIII;
FIG. 9 is a schematic structural diagram of a first layer according to an embodiment of this application;
FIG. 10 is a schematic diagram of a partial structure of a battery according to another embodiment of this application;
FIG. 11 is a cross-sectional view of the battery shown in FIG. 10 in a direction XI-XI;
FIG. 12 is a schematic diagram of a partial structure of a battery according to another embodiment of this application;
FIG. 13 is a cross-sectional view of the battery shown in FIG. 12 in a direction XIII-XIII; and

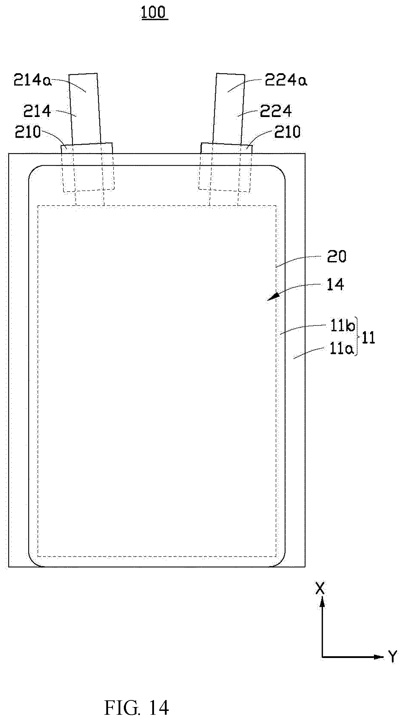

FIG. 14 is a schematic structural diagram of a battery according to Comparative Example 1 of this application.

**Reference signs of main components:**

| | |
|---|---|
| Battery | 100 |
| Housing | 10 |
| Electrode assembly | 20 |
| First layer | 30 |
| Second layer | 40 |
| First part | 11 |
| Second part | 12 |
| Accommodating cavity | 14 |
| First metal plate | 214 |
| Second metal plate | 224 |
| First surface | 214a |
| Second surface | 214b |
| Third surface | 224a |
| Fourth surface | 224b |
| First electrode | 21 |
| First face | 211a |
| Second face | 211b |
| Third face | 221 a |
| Fourth face | 221b |
| Second electrode | 22 |
| Separator | 23 |
| First conductor | 211 |
| First conductive material layer | 212 |
| First tab | 213 |
| Adapter plate | 24 |
| Second conductor | 221 |
| Second tab | 223 |
| Second conductive material layer | 222 |
| First zone | 31 |
| Second zone | 32 |
| First area | 11a |
| Second area | 11b |
| Third area | 12a |
| Fourth area | 12b |
| Third zone | 33 |
| Fourth zone | 34 |
| Fifth zone | 35 |
| Sixth zone | 36 |
| Substrate | 301 |
| Adhesive layer | 303 |
| Third layer | 210 |
| Endpoint | 11aa |
| First overlapping part | 30a |
| Second overlapping part | 30b |
| First overlapping zone | 34a |
| Second overlapping zone | 34b |
| Third overlapping zone | 34c |
| Fourth overlapping zone | 35a |
| Fifth overlapping zone | 35b |
| Sixth overlapping zone | 35c |
| Seventh overlapping zone | 36a |
| Eighth overlapping zone | 36b |
| Ninth overlapping zone | 36c |

### DESCRIPTION OF EMBODIMENTS

The following clearly and detailed describes the technical solutions in the embodiments of this application. Apparently, the described embodiments are only a part rather than all of the embodiments of this application. Unless otherwise defined, all technical and scientific terms used herein have the same meanings as commonly understood by those skilled in the art to which this application belongs. The terms used in the specification of this application are merely intended to describe specific embodiments but not intended to constitute any limitation on this application.

The following describes the embodiments of this application in detail. However, this application may be embodied in many different forms, and should not be construed as being limited to the example embodiments explained herein. Rather, these example embodiments are provided so that this application can be thoroughly and detailed to those skilled in the art.

In addition, for brevity and clarity, in the accompanying drawings, sizes or thicknesses of various components and layers may be magnified. Throughout the text, the same numerical values represent the same elements. As used herein, the term "and/or" includes any and all combinations of one or more related listed items. In addition, it should be understood that when an element A is referred to as "connecting" an element B, the element A may be directly connected to the element B, or there may be an intermediate element C and the element A and the element B may be indirectly connected to each other.

Further, the use of "may" when describing the embodiments of this application refers to "one or more embodiments of this application".

The terminology used herein is for the purpose of describing specific embodiments and is not intended to limit this application. As used herein, singular forms are intended to also include plural forms, unless the context clearly specifies otherwise. It should be further understood that the term "including", when used in this specification, refers to the presence of the described features, values, steps, operations, elements, and/or components, but does not exclude the presence or addition of one or more other features, values, steps, operations, elements, components, and/or combinations thereof.

Spatial related terms such as "above" may be used herein for ease of description to describe the relationship between one element or feature and another element (elements) or feature (features) as illustrated in the figure. It should be understood that, in addition to the directions described in the figures, the spatial related terms are intended to include different directions in the use or operation of devices or apparatus. For example, if a device in the figure is turned over, an element described as "on" or "above" another element or feature should be oriented "below" or "under" the another element or feature. Therefore, the example term "above" may include directions of above and below. It should be understood that although the terms first, second, third, or the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, a first element, component, region, layer, or portion discussed below may be referred to as a second element, component, region, layer, or portion without departing from the teachings of the example embodiments.

In this application, direction X refers to a direction extending from a first zone to a second zone in a first layer; direction Y refers to a direction extending from a first metal plate to a second metal plate; and direction Z is a direction perpendicular to a first surface of the first metal plate; where the three directions X, Y, and Z are perpendicular to each other.

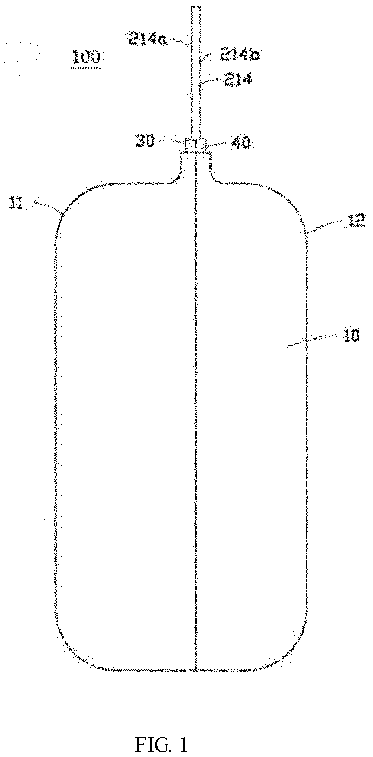

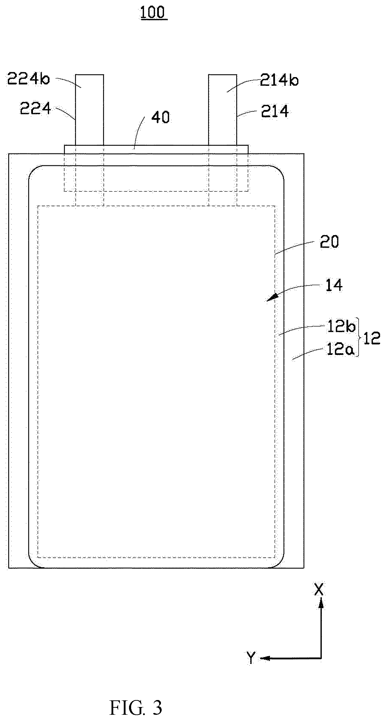

Referring to FIG. 1 to FIG. 3, an embodiment of this application provides a battery 100, including a housing 10, an electrode assembly 20, an electrolyte (not shown), a first layer 30, and a second layer 40.

The housing 10 includes a first part 11 and a second part 12 that are provided opposite to each other. The first part 11 and the second part 12 match in shape. The first part 11 includes a first area 11a and a second area 11b that are interconnected. The first area 11a is connected to the second part 12, and three sides of the second area 11b are surrounded by the first area 11a. When viewed from a direction Z, the second area 11b covers the electrode assembly 20. The second part 12 includes a third area 12a and a fourth area 12b that are interconnected. The third area 12a is connected to the first part 11, and three sides of the fourth area 12b are surrounded by the third area 12a. When viewed from the direction Z, the fourth area 12b covers the electrode assembly 20. The second area 11b of the first part 11 and the fourth area 12b of the second part 12 together form an accommodating cavity 14 for accommodating the electrolyte, part of the electrode assembly 20, and at least part of the first layer 30 and the second layer 40. The housing 10 may be a packaging bag obtained by packaging with a packaging film, which indicates that the battery 100 is a soft package battery.

In some embodiments, the packaging film used to form the housing 10 includes a protective layer, a metal layer, and a packaging layer that are stacked in sequence, where the packaging layer is close to the electrode assembly 20, and the protective layer is away from the electrode assembly 20. The protective layer is made of polymer resin, used to protect the metal layer from being damaged by external force, and capable of preventing air from penetrating inside and maintaining a water- and oxygen-free internal environment for the battery 100. The metal layer is made of metal, such as aluminum and steel, to avoid penetration of moisture from the external environment and protect the battery 100 from being damaged by external force. The packaging layer is made of polymer, such as polypropylene and polyamide, and is used to package the packaging film to prevent the packaging film from being dissolved or swelled by an organic solvent in the electrolyte. The packaging layer is also used to prevent an electrolyte salt in the electrolyte from coming into contact with the metal layer and corroding the metal layer. During preparation of the housing 10, the packaging film may be folded in half, and then a heat sealing head is used to apply specified temperature and pressure on a surface of the folded packaging film for heat sealing, so that packaging layers of the packaging film are melted and connected. In this case, the innermost layer of the housing 10 is the packaging layer. In some other embodiments, the battery 100 is not limited to a soft package battery, and may be a steel shell battery, an aluminum shell battery, or the like, which is not limited in this application.

The electrode assembly 20 includes a first metal plate 214 and a second metal plate 224. The first metal plate 214 and the second metal plate 224 both protrude from one end of the housing 10 to connect to external components. The first metal plate 214 includes a first surface 214a facing the first part 11 and a second surface 214b facing the second part 12. The second metal plate 224 includes a third surface 224a facing the first part 11 and a fourth surface 224b facing the second part 12.

The first layer 30 is sheet-shaped, covers at least part of the first surface 214a of the first metal plate 214 and at least part of the third surface 224a of the second metal plate 224, and is separately connected to the first surface 214a, the third surface 224a, and at least part of the first part 11. A material of the first layer 30 includes an insulating material, and the insulating material is selected from at least one of polyethylene, polypropylene, phenolic resin, melamine resin, unsaturated polyester resin, epoxy resin, silicone resin, or polyurethane.

The first layer 30 is more fir for the metal plate than the housing 10 is for the metal plate. Because the metal plate only undergoes a short heating and pressurization process during the packaging, if the first layer 30 is not provided between the housing 10 and the metal plate, there may be a gap between the metal plate and the housing 10, or separation is likely to occur in a subsequent life cycle, which seriously affects the sealing performance. In addition, both the first layer 30 and the packaging layer of the housing 10 may be made of polymer, with approximate melting points, and can be well bonded in a high-temperature pressurized environment, thereby improving the sealing performance.

The second layer 40 is sheet-shaped, covers at least part of the second surface 214b of the first metal plate 214 and at least part of the fourth surface 224b of the second metal plate 224, and is separately connected to the second surface 214b, the fourth surface 224b, and at least part of the second part 12. A material of the second layer 40 includes an insulating material, and the insulating material is selected from at least one of polyethylene, polypropylene, phenolic resin, melamine resin, unsaturated polyester resin, epoxy resin, silicone resin, or polyurethane.

In some embodiments, the first layer 30 allows visible light to pass through, and the second layer 40 allows visible light to pass through.

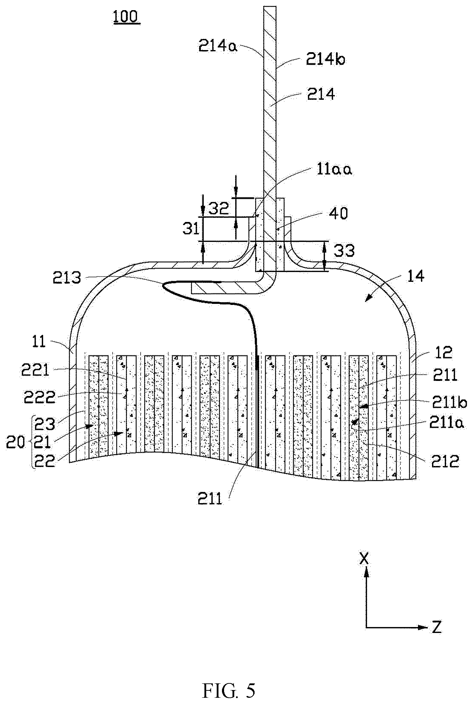

Referring to FIG. 5, the electrode assembly 20 includes a first electrode 21, a second electrode 22, and a separator 23, where the separator 23 is provided between the first electrode 21 and the second electrode 22. The separator 23 is configured to prevent direct contact between the first electrode 21 and the second electrode 22, to protect the electrode assembly 20 from short-circuit. The electrolyte is used to infiltrate the first electrode 21, the second electrode 22, and the separator 23. In FIG. 5, the electrode assembly 20 has a wound structure, meaning that the first electrode 21, the separator 23, and the second electrode 22 are stacked in sequence and wound to form the electrode assembly 20. In some other embodiments, the electrode assembly 20 may alternatively have a laminated structure, meaning that the first electrode 21, the separator 23, and the second electrode 22 are stacked in sequence to form the electrode assembly 20, which is not limited in this application.

The first electrode 21 includes a first conductor 211, a first conductive material layer 212, a first tab 213 and a first metal plate 214. The first conductor 211 includes a first face 211a and a second face 211b which are provided opposite each other. The first face 211a and the second face 211b each include a zone in which the first conductive material layer 212 is provided and a zone away from the first conductive material layer 212. A material of the first conductive material layer 212 may be an active material, for example, may be one or more selected from LiCoO₂, LiFePO₄ and other electrochemically active materials that can deintercalate lithium ions. The first tab 213 is welded to the first face 211a of the first conductor 211 and connected to a first surface 214a of the first metal plate 214. In other embodiments, the first tab 213 may be formed by extending one end of the first face 211a in the zone away from the first conductive material layer 212, and is connected to the first surface 214a of the first metal plate 214, which is not limited in this application. One end of the first metal plate 214 is connected to the first tab 213, and the other end of the first metal plate 214 extends out of the housing 10 from one end of the housing 10. The first metal plate 214 is connected to the first electrode 21 in the housing 10. When viewed from the direction Z, the first metal plate 214 passes through a first area 11a from a second area 11b and extends out of the housing 10.

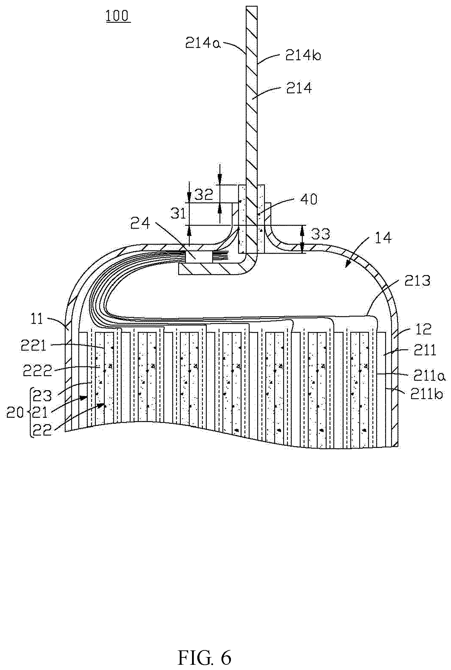

Referring to FIG. 6, a battery according to another embodiment of this application differs from the battery shown in FIG. 5 in that: A first electrode body 21 includes a plurality of first tabs 213, and each first tab 213 is formed by extending one end of the first face 211a in the zone away from the first conductive material layer 212, and is connected to the first surface 214a of the first metal plate 214 through an adapter plate 24.

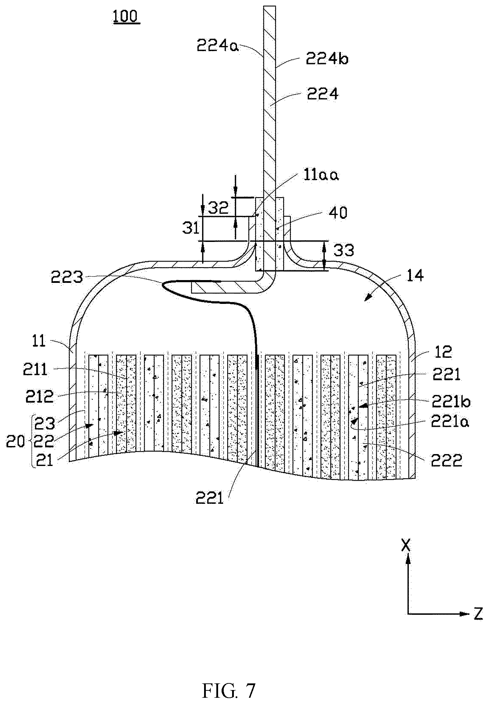

Referring to FIG. 7, the second electrode 22 includes a second conductor 221, a second conductive material layer 222, a second tab 223, and a second metal plate 224. The second conductor 221 includes a third face 221a and a fourth face 221b which are provided opposite each other. The third face 221a and the fourth face 221b each include a zone in which the second conductive material layer 222 is provided and a zone away from the second conductive material layer 222. A material of the second conductive material layer 222 may be an active material, for example, may be one or more selected from graphite, soft carbon, hard carbon, Li₄Ti₅0₁₂, and other electrochemically active materials that can intercalate lithium ions. The second tab 223 is formed by extending one end of the third face 221a in the zone away from the second conductive material layer 222, and is connected to the third surface 224a of the second metal plate 224. In other embodiments, the second tab 223 may be welded on the third face 221a of the second conductor 221, which is not limited in this application. One end of the second metal plate 224 is connected to the second tab 223, and the other end of the second metal plate 224 extends out of the housing 10 from one end of the housing 10. The second metal plate 224 is connected to the second electrode 22 in the housing 10. When viewed from the direction Z, the second metal plate 224 passes through a first area 11a from a second area 11b and extends out of the housing 10.

The housing 10 covers part of the first electrode 21, part of the second electrode 22, at least part of the first layer 30, and at least part of the second layer 40 through the first part 11 and the second part 12.

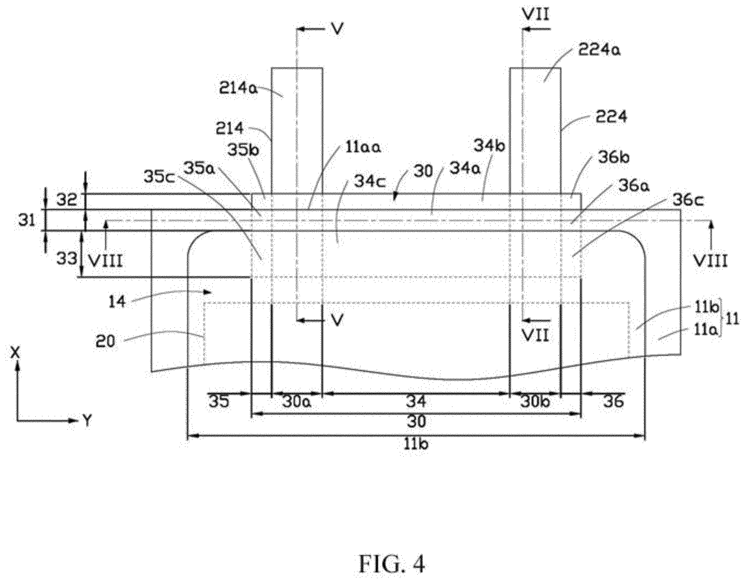

Referring to FIG. 4, FIG. 5, and FIG. 7, the first layer 30 includes a first zone 31 connected to the first part 11 located in the first area 11a, a second zone 32 connected to the first zone 31 and located outside the housing 10, and a third zone 33 connected to the first zone 31 and located in an accommodating cavity 14. Specifically, the first zone 31 is a zone in which an orthographic projection of the first layer 30 in the direction Z coincides with the first area 11a of the first part 11 and is sandwiched between the first area 11a of the first part 11 and the third area 12a of the second part 12 in the direction Z; the second zone 32 is a zone of the first layer 30 that is connected to the first zone 31 and that, when viewed from the direction Z, is farther away from the housing 10 than an endpoint 11aa of the first part 11 in a direction X; and the third zone 33 is a zone of the first layer 30 that is connected to the first zone 31 and that, when viewed from the direction Z, is closer to the inside of the housing 10 than the endpoint 11aa of the first part 11 in the direction X. In some embodiments, in the first layer 30, in the direction X, the first zone 31 is longer than the second zone 32, and the third zone 33 is longer than the first zone 31. A shorter length of the second zone 32 has smaller impact on subsequent packaging. In the direction Y, the first layer 30 is shorter than the housing 10. In some embodiments, in the direction Y, the first layer 30 is shorter than the second area 11b.

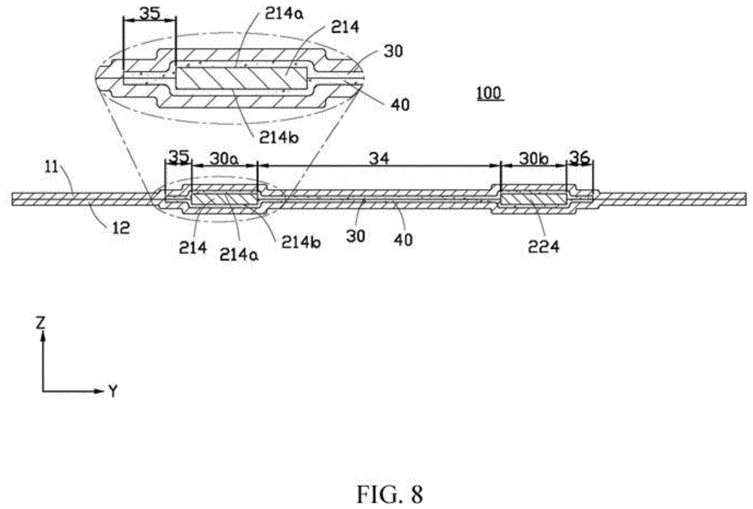

Referring to FIG. 4 and FIG. 8, in the direction Y, the first layer 30 and the second layer 40 both cover the first metal plate 214 and the second metal plate 224, and both extend a specified distance in the direction Y and a direction opposite to the direction Y. The first layer 30 further includes a fourth zone 34 located between the first metal plate 214 and the second metal plate 224, a fifth zone 35 located on a side of the first metal plate 214 away from the fourth zone 34, and a sixth zone 36 located on a side of the second metal plate 224 away from the fourth zone 34. When viewed from the direction Z, there is a first overlapping part 30a between the first layer 30 and the first metal plate 214, and there is a second overlapping part 30b between the first layer 30 and the second metal plate 224. The first overlapping part 30a includes part of the first zone 31, part of the second zone 32, and part of the third zone 33 that cover the first surface 214a, and the second overlapping part 30b includes part of the first zone 31, part of the second zone 32, and part of the third zone 33 that cover the third surface 224a. The fourth zone 34 connects the first overlapping part 30a and the second overlapping part 30b. The fifth zone 35 is connected to a side of the first overlapping part 30a away from the fourth zone 34. The sixth zone 36 is connected to a side of the second overlapping part 30b away from the fourth zone 34. When viewed from the direction Z, the fourth zone 34 has a first overlapping zone 34a, a second overlapping zone 34b, and a third overlapping zone 34c with the first zone 31, the second zone 32, and the third zone 33, respectively; the fifth zone 35 has a fourth overlapping zone 35a, a fifth overlapping zone 35b, and a sixth overlapping zone 35c with the first zone 31, the second zone 32, and the third zone 33, respectively; and the sixth zone 36 has a seventh overlapping zone 36a, an eighth overlapping zone 36b, and a ninth overlapping zone 36c with the first zone 31, the second zone 32, and the third zone 33, respectively. The first layer 30 and the second layer 40 have interconnected parts. In some embodiments, when viewed from the direction Z, the fourth zone 34 is connected to the second layer 40, and at least one of the fifth zone 35 or the sixth zone 36 is connected to the second layer 40. In some embodiments, the fifth zone 35 and the sixth zone 36 are both connected to the second layer 40. The fourth zone 34 is connected to the second layer 40 in at least one of the first overlapping zone 34a, the second overlapping zone 34b, or the third overlapping zone 34c; the fifth zone 35 is connected to the second layer 40 in at least one of the fourth overlapping zone 35a, the fifth overlapping zone 35b, or the sixth overlapping zone 35c; and the sixth zone 36 is connected to the second layer 40 in at least one of the seventh overlapping zone 36a, the eighth overlapping zone 36b, or the ninth overlapping zone 36c. The fourth zone 34 covers a sidewall of the first metal plate 214 that connects the first surface 214a and the second surface 214b and a sidewall of the second metal plate 224 that connects the third surface 224a and the fourth surface 224b; the fifth zone 35 covers the other sidewall of the first metal plate 214; and the sixth zone 36 covers the other sidewall of the second metal plate 224. In other words, the first layer 30 is in close contact with the two sidewalls of the first metal plate 214 and the two sidewalls of the second metal plate 224. This can prevent a decrease of airtightness in the housing 10 due to the provision of the first metal plate 214 and the second metal plate 224 herein. In some embodiments, the second layer 40 is in close contact with the two sidewalls of the first metal plate 214 and the two sidewalls of the second metal plate 224.

In some other embodiments, when viewed from the direction Z, the first layer 30 is connected to the second layer 40 in the first zone 31. In some other embodiments, when viewed from the direction Z, the first layer 30 is connected to the second layer 40 in the second zone 32.

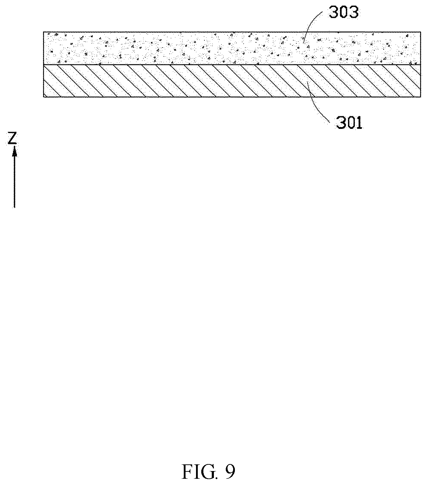

Referring to FIG. 9, the first layer 30 is formed by stacking one or more layers of materials in the direction Z. In some embodiments, the first layer 30 is formed by stacking two layers of materials, including a substrate 301 and an adhesive layer 303. A material of the substrate 301 may be at least one of polyethylene terephthalate, polyimide, or polyamideimide. A material of the adhesive layer 303 may be at least one of polyethylene, polypropylene, phenolic resin, melamine resin, unsaturated polyester resin, epoxy resin, silicone resin, or polyurethane. The adhesive layer 303 is bonded to the first metal plate and the second metal plate, and there is a welded part between the substrate 301 and the packaging layer of the housing 10.

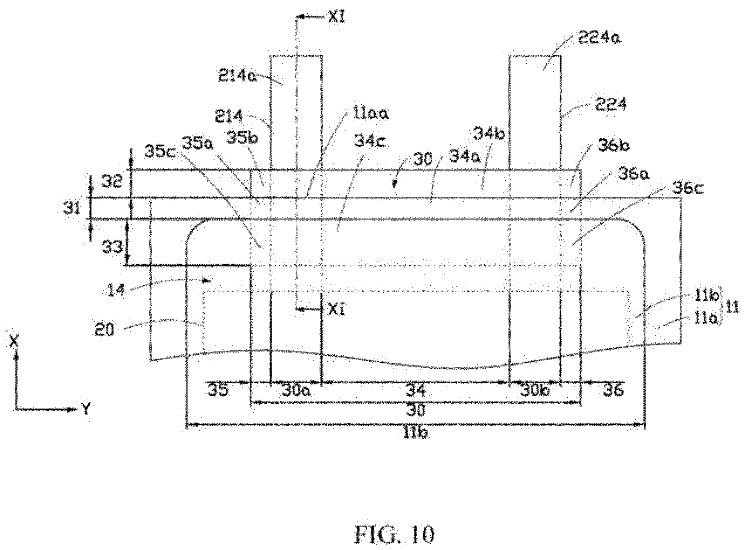

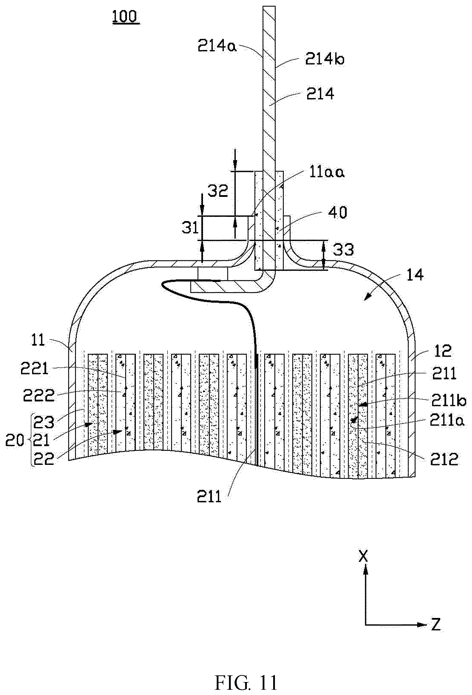

Referring to FIG. 10 and FIG. 11, in some embodiments, in the first layer 30, the first zone 31 is shorter than the second zone 32 in the direction X.

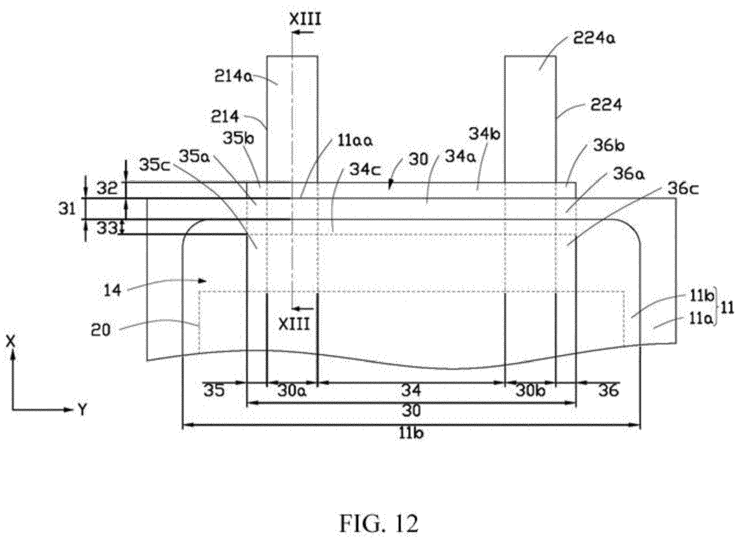

Referring to FIG. 11 and FIG. 12, in some embodiments, in the first layer 30, the first zone 31 is longer than the third zone 33 in the direction X. A shorter length of the third zone 33 allows the electrode assembly 20 to occupy less internal space of the housing 10, thereby improving energy density.

In this application, the first layer 30 is provided between the first metal plate 214 and the housing 10, and the second layer 40 is provided between the second metal plate 224 and the housing 10, implementing sealing of the first electrode 21 and the second electrode 22 in the housing 10. In addition, both the first layer 30 and the second layer 40 cover the first metal plate 214 and the second metal plate 224, so that relative positions of the first metal plate 214 and the second metal plate 224 are fixed. In this way, the first metal plate 214 and the second metal plate 224 are not easy to tilt when subject to external force, avoiding that the sealing performance is affected by the tilt. In addition, the first layer 30 and the second layer 40 that are in a one-piece form prevent the first part 11 and the second part 12 of the housing 10 located between the first metal plate 214 and the second metal plate 224 from coming into direct contact, so that a height difference in a sealing zone is small, further improving the sealing performance.

The following describes this application in detail with reference to specific examples and comparative examples.

### Example 1

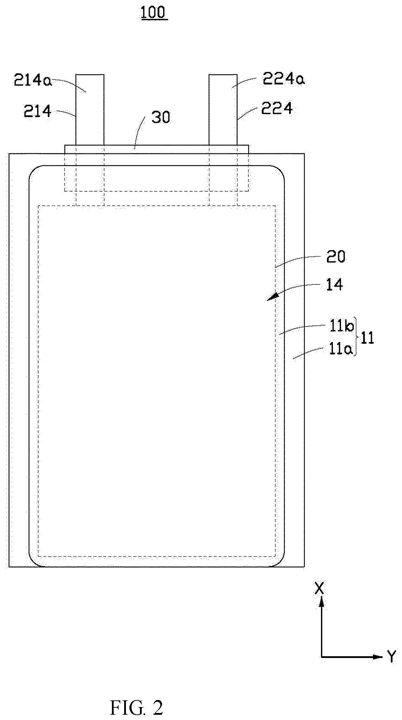

The first layer and the second layer were separately connected to the first metal plate and the second metal plate for adhesive bonding, and then the first metal plate and the second metal plate were welded to the first tab and the second tab, respectively. Orders of the bonding process and the welding process can be exchanged. The first electrode, the second electrode, and the separator were stacked and wound to obtain an electrode assembly. Then electrolyte injection, chemical conversion, and packaging were performed to make the battery shown in FIG. 2.

### Comparative Example 1

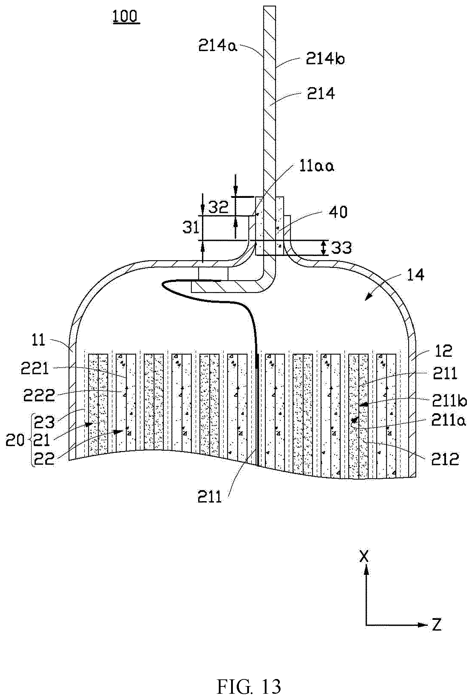

A difference from Example 1 was that two third layers 210 were respectively connected to the first metal plate 214 and the second metal plate 224 for adhesive bonding, as shown in FIG. 13. The third layer 210 included an insulating material.

One hundred batteries were selected from each example and each comparative example for testing, the yield rates of the batteries in each example and each comparative example were counted, and the results were recorded in Table 1.

**Table 1**

| | Yield rate |
|---|---|
| Example 1 | 98% |
| Comparative Example 1 | 87% |

It could be learned from data in Table 1 that the yield rate in Example 1 was higher than that in Comparative Example 1. The first layer 30 and the second layer 40 were both connected to the first metal plate 214 and the second metal plate 224, so that relative positions of the first metal plate 214 and the second metal plate 224 were fixed. This technical solution had a better effect of restraining the first metal plate 214 and the second metal plate 224 from tilting when subjected to external force, thereby improving the sealing performance and improving the yield rate. In Comparative Example 1, the two third layers 210 were respectively attached to the first metal plate 214 and the second metal plate 224. This technical solution was not effective enough to prevent the first metal plate 214 and the second metal plate 224 from tilting when subjected to external force (as shown in FIG. 13), affecting the sealing performance and reducing the yield rate.

The descriptions disclosed above are only the preferred embodiments of this application, and do not, certainly, constitute limitation to this application. Accordingly, any equivalent changes made in accordance with this application still fall within the scope of this application.

## Claims

1. A battery, comprising a first electrode, a second electrode, a first layer, and a housing, **characterized in that**:
the first electrode comprises a first conductor having a first face and a second face, and a first metal plate connected to the first face of the first conductor;
the second electrode comprises a second conductor having a third face and a fourth face, and a second metal plate connected to the third face of the second conductor;
the first layer comprises an insulating material and is connected to a first surface of the first metal plate and a third surface of the second metal plate; and
the housing comprises a first part and a second part, and covers the first electrode, the second electrode, and at least part of the first layer through the first part and the second part, wherein at least part of the first part is connected to the first layer.

2. The battery according to claim 1, **characterized in that** the first layer comprises a first zone connected to the first part and a second zone connected to the first zone and away from the housing.

3. The battery according to claim 1, **characterized in that** the first layer comprises a first zone connected to the first part and a third zone connected to the first zone and covered by the housing.

4. The battery according to claim 2, **characterized in that** the first layer further comprises a third zone connected to the first zone and covered by the housing.

5. The battery according to claim 2, **characterized in that** in the first layer, the first zone is shorter than the second zone in a first direction extending from the first zone to the second zone.

6. The battery according to claim 2, **characterized in that** in the first layer, the first zone is longer than the second zone in a first direction extending from the first zone to the second zone.

7. The battery according to claim 4, **characterized in that** in the first layer, the third zone is shorter than the second zone in a first direction extending from the first zone to the second zone.

8. The battery according to claim 4, **characterized in that** in the first layer, the third zone is longer than the second zone in a first direction extending from the first zone to the second zone.

9. The battery according to claim 1, **characterized in that** the first layer is shorter than the housing in a second direction extending from the first metal plate to the second metal plate.

10. The battery according to claim 1, **characterized in that** the first layer is formed by stacking one or more layers of materials in a third direction perpendicular to the first surface of the first metal plate.

11. The battery according to claim 1, **characterized in that** the first layer is provided away from the first conductor.

12. The battery according to claim 1, **characterized in that** the battery further comprises a second layer containing an insulating material, wherein the second layer is connected to both a second surface of the first metal plate and a fourth surface of the second metal plate.

13. The battery according to claim 12, **characterized in that** the first layer is connected to the second layer.

14. The battery according to claim 13, **characterized in that** the first layer comprises a fourth zone located between the first metal plate and the second metal plate, wherein when viewed from a third direction perpendicular to the first surface of the first metal plate, the fourth zone is connected to the second layer.

15. The battery according to claim 14, **characterized in that** the first layer further comprises a fifth zone located on a side of the first metal plate away from the fourth zone and a sixth zone located on a side of the second metal plate away from the fourth zone, wherein when viewed from the third direction perpendicular to the first surface of the first metal plate, at least one of the fifth zone or the sixth zone is connected to the second layer.

16. The battery according to claim 13, **characterized in that** the first layer comprises a first zone connected to the first part and a second zone connected to the first zone and away from the housing.

17. The battery according to claim 16, **characterized in that** when viewed from a third direction perpendicular to the first surface of the first metal plate, the first layer is connected to the second layer at least in the first zone.

18. The battery according to claim 16, **characterized in that** when viewed from a third direction perpendicular to the first surface of the first metal plate, the first layer is connected to the second layer at least in the second zone.

19. The battery according to claim 13, **characterized in that** the first layer comprises a first zone connected to the first part and a third zone connected to the first zone and covered by the housing.

20. The battery according to claim 19, **characterized in that** when viewed from a third direction perpendicular to the first surface of the first metal plate, the first layer is connected to the second layer at least in the third zone.

21. The battery according to claim 1, **characterized in that** the first layer comprises at least one of polyethylene, polypropylene, phenolic resin, melamine resin, unsaturated polyester resin, epoxy resin, silicone resin, or polyurethane.

22. The battery according to claim 12, **characterized in that** the second layer comprises at least one of polyethylene, polypropylene, phenolic resin, melamine resin, unsaturated polyester resin, epoxy resin, silicone resin, or polyurethane.

23. The battery according to claim 1, **characterized in that** the first layer allows visible light to pass through.

24. The battery according to claim 12, **characterized in that** the second layer allows visible light to pass through.
